# EUROPÄISCHE PATENTSCHRIFT

(11) **EP 1 354 828 B1**
(45) Veröffentlichungstag und Bekanntmachung des Hinweises auf die Patenterteilung: **01.06.2005**
(21) Anmeldenummer: 03003569.5
(22) Anmeldetag: 17.02.2003
(51) Int. Cl.: B65G 1/04

(54) **Vorrichtung zum Einsortieren, Lagern und Aussortieren von Gütern**
Device for storing and retrieving articles
Dispositif de stockage et déstockage d'objets

(30) Priorität: 19.04.2002 DE 20206257 U
(43) Veröffentlichungstag der Anmeldung: 22.10.2003
(73) Patentinhaber: Otto (GmbH & Co KG), 22172 Hamburg (DE)
(72) Erfinder: Schieleit, Jürgen, Dr., 22941 Bargteheide (DE)
(74) Vertreter: Rohnke, Christian, Dr.

(56) Entgegenhaltungen:
- EP-A- 0 737 631
- US-A- 4 529 081
- US-A- 5 238 349

## Beschreibung

Die vorliegende Erfindung betrifft eine Vorrichtung zum Einsortieren, Lagern und Aussortieren von Gütern aus einem bzw. in ein Regal.

Die Lagerung von Gütern ist eine immer wiederkehrende Notwendigkeit, um in einem Betrieb zum Beispiel Handelsgüter oder Ersatzteile bereitzuhalten. Insbesondere Stückgüter, Einzelteile oder Verpackungseinheiten werden dazu bekanntlich in Regalen sortiert gelagert. Aus dem ursprünglichen Ein- und Aussortieren der Güter von Hand - zur Überbrückung mehrerer Regalhöhen mittels Leitern - haben sich im Zuge der Automatisierung logistische Vorrichtungen und Verfahren entwickelt, die in der Lage sind, auf großen Regalflächen und in großen Regalhöhen auch schwere Lagergüter einund auszusortieren. Gabelstapler seien dazu hier als Beispiel genannt. Auch programmierbare logistische Vorrichtungen sind bekannt, bei denen eine computernumerische Steuerung die Auswahl eines Regalfaches entsprechend dem Programm vornimmt, und eine roboterartige Vorrichtung dann die programmierte logistische Maßnahme trifft.

Nachteilig bei den bekannten Systemen ist der üblicherweise im Wesentlichen nur sequenziell mögliche Zugriff auf die Fächer einer Regaloberfläche. Um nämlich Kollisionen zu vermeiden, muß eine zweite Ein- oder Auslagerungsvorrichtung vor einer Regalfläche warten, bis eine erste dort bereits tätige Ein- oder Auslagerungsvorrichtung ihre Tätigkeit abgeschlossen hat. Oder es sind aufwendige Steuerungs- und Koordinierungsprogramme erforderlich, um bei gleichzeitiger Tätigkeit von mehreren solcher Vorrichtungen Kollisionen zu vermeiden. Die Verwendung solcher bekannten Vorrichtungen zum Einsortieren, Lagern und Aussortieren von Gütern führt folglich zu nachteilig langen Wartezeiten, wenn ein erforderlich hoher Durchsatz eine zu schnelle Anlieferung von einzulagernden Gütern und/oder eine zu schnelle Abforderung von auszulagernden Gütern bewirkt. Um diesen Nachteilen zu entgegen sind bisher nur Vorrichtungen mit besonders hohen Fahrgeschwindigkeiten, Vorrichtungen mit mitfahrenden Magazinen oder mit mehrfachen Aufnahmemitteln für die angelieferten Teile insbesondere in Lagersystemen für Kleinteile bekannt geworden.

Der vorliegenden Erfindung liegt die Aufgabe zu Grunde, eine Vorrichtung zum Einsortieren, Lagern und Aussortieren von Gütern in ein und aus einem Regal zu schaffen, die das Ein- und Aussortieren weiter deutlich beschleunigt.

Diese Aufgabe wird von einer Vorrichtung mit den Merkmalen des Anspruchs 1 gelöst. Bevorzugte Ausgestaltungen sind in den Unteransprüchen angegeben.

Erfindungsgemäß weist die Vorrichtung mindestens ein Regal auf mit Fächern, die in einer im Wesentlichen senkrechten Ebene in einer Matrix in einer ersten und einer zweiten Richtung zueinander angeordnet sind. Die Regalfächer liegen also im Wesentlichen über- und nebeneinander, und zwar vorzugsweise senkrecht und waagerecht sozusagen in Spalten und Zeilen. Eine erste Fördereinrichtung der erfindungsgemäßen Vorrichtung weist einen Tragrahmen auf, der sich mittels der Fördereinrichtung in einer ersten Richtung - und zwar als Hubeinrichtung in senkrechter Richtung - vor den Fächern in einer im Wesentlichen senkrechten Ebene - also sozusagen "vor dem Regal" auf einer Seite, von der die Fächer zugänglich sind - verfahren läßt. An dem Tragrahmen sind erfindungsgemäß so viele zweite Fördereinrichtungen wie Regalspalten angebracht, mittels derer sich die Güter in einer zweiten Richtung - mittels horizontal laufender Förderbänder - in der genannten im Wesentlichen senkrechten Ebene "vor dem Regal" fördern läßt. Vorzugsweise mindestens zwei zweite Fördereinrichtungen sind in Reihe angeordnet und bilden so eine Förderlinie. Das heißt, ein von einer der zweiten Fördereinrichtungen transportiertes Gut kann von einer nächsten in der Förderlinie daran anschließenden zweiten Fördereinrichtung aufgenommen und weitertransportiert werden. So können auch mehr als zwei zweite Fördereinrichtungen eine Förderlinie bilden, und zwar so viele Förderer, wie das Regal nebeneinander liegende Fächer, also "Spalten" hat.

Mehr als eine dritte Fördereinrichtung bewerkstelligt dann erfindungsgemäß den Transport des Gutes zwischen der zweiten Fördereinrichtung und einem Fach, vor dem das Gut mittels der ersten und zweiten Fördereinrichtung positioniert wurde. Vorzugsweise weist die Vorrichtung so viele dritte Fördereinrichtungen auf wie das Regal Fächer in der zweiten Richtung, in der die zweiten Fördereinrichtungen die Güter fördern. In der bevorzugten Ausgestaltung der Erfindung mit der ersten Fördereinrichtung als Hubeinrichtung und den zweiten Fördereinrichtungen als in Reihe angeordneten Förderbändern ist dann vorzugsweise jeder Regalfach-"Spalte" eine dritte Fördereinrichtung zugeordnet, die vorzugsweise ebenfalls an dem Tragrahmen angebracht ist.

Alternativ kann die Vorrichtung auch weniger dritte Fördereinrichtungen als Spalten aufweisen, die dann selbst in die zweite Richtung bewegbar sind, damit sie Güter in jeder Regelfach-"Spalte" einlagern kann.

Eine bevorzugte Ausgestaltung der erfindungsgemäßen Vorrichtung mit verdoppelter Lagerkapazität zeichnet sich durch zwei Regale aus, die jeweils auf einer Seite der Förderebene der ersten und zweiten Fördereinrichtung angeordnet sind. Bei so mit ihren Zugangsseiten einander gegenüberliegenden Fächern der beiden Regale kann jede dritte Fördereinrichtung in einer Richtung den Transport eines Gutes zwischen der zweiten Fördereinrichtung und einem Fach des einen Regals und in der anderen Richtung zwischen der zweiten Fördereinrichtung und einem Fach des anderen Regals übernehmen.

Um zu gewährleisten, dass mittels der erfindungsgemäßen Vorrichtung jedes Regalfach erreichbar ist, erstreckt sich der Förderweg der ersten und zweiten Fördereinrichtungen vorzugsweise sowohl in der ersten als auch in der zweiten Richtung über die gesamte Regalfläche.

Insbesondere bei der besonders bevorzugten Ausgestaltung, bei der die erfindungsgemäße Vorrichtung ebenso viele zweite Fördereinrichtungen aufweist wie Regalfächer in der zweiten Richtung, ist die Ein- und Auslagerungsgeschwindigkeit der erfindungsgemäßen Vorrichtung beträchtlich, was mit Blick auf die nachfolgende Beschreibung der beigefügten Figuren besonders deutlich wird.

Im Folgenden wird die vorliegende Erfindung mit Bezug auf die beigefügten Figuren beschrieben:
- **Figur 1**: zeigt eine räumliche schematische Ansicht einer erfindungsgemäßen Vorrichtung mit zwei Regalen, von denen eines geschnitten dargestellt ist, wobei die Fördereinrichtungen der Vorrichtung nur durch Pfeile angedeutet sind, die den jeweiligen Förderweg darstellen,
- **Figur 2**: zeigt schematisch einen Querschnitt durch die Vorrichtung gemäß Figur 1,
- **Figur 3a)**: zeigt in der Ansicht und Darstellungsform gemäß Figur 1 die ersten, zweiten und dritten Fördereinrichtungen gemäß Figur 1,
- **Figur 3b)**: zeigt in der Ansicht und Darstellungsform gemäß Figur 1 eine alternative Ausgestaltung der ersten, zweiten und dritten Fördereinrichtungen,
- **Figur 3c)**: zeigt in der Ansicht und Darstellungsform gemäß Figur 1 eine weitere alternative Ausgestaltung der ersten, zweiten und dritten Fördereinrichtungen,

- **Figur 4**: zeigt in der Ansicht und Darstellungsform gemäß Figur 1 eine bezüglich ihrer Zu- und Abführungsvorrichtung alternative Ausgestaltung der erfindungsgemäßen Vorrichtung nach Figur 1,
- **Figur 5**: zeigt eine Draufsicht auf die Zugangsebene der Regale von zwei in Reihe geschalteten erfindungsgemäßen Vorrichtungen und
- **Figur 6**: zeigt in der Ansicht und Darstellungsform gemäß Figur 5 eine demgegenüber alternative Anordnung der in Reihe geschalteten zwei erfindungsgemäßen Vorrichtungen.

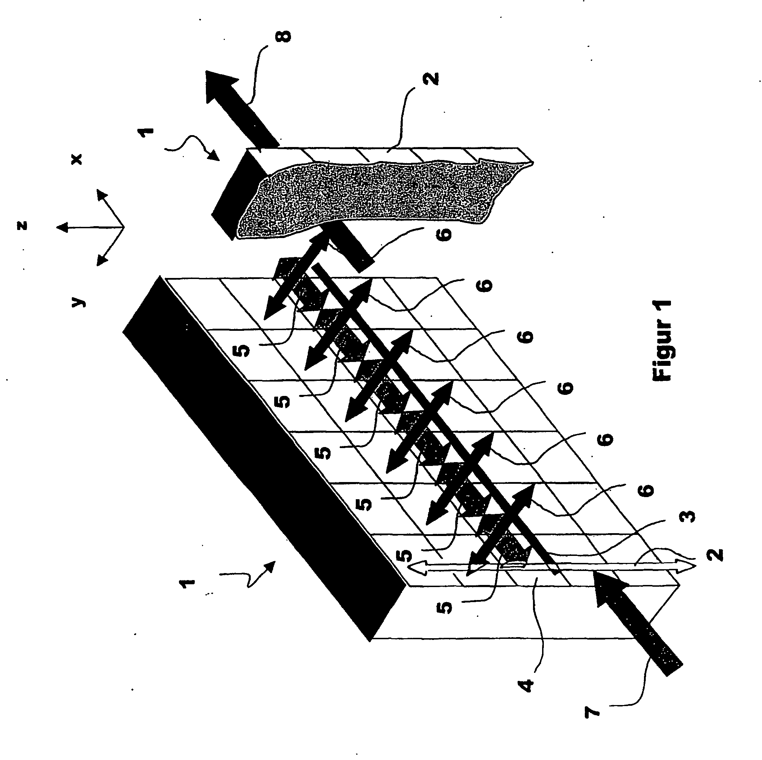

In einem Lagerbereich 1, z. B. einer Regalgasse, aus zwei Regalen 1, die in verschiedene Fächer 2 untergliedert sind, befindet sich gemäß Figur 1 ein Tragrahmen 3. Der Tragrahmen 3 kann bezogen auf die Anordnung der Fächer 2 mittels einer ersten Fördereinrichtung oder Hubeinrichtung 4 in z-Richtung vorzugsweise computergesteuert verfahren. Auf dem Tragrahmen 3 sind sechs zweite Fördereinrichtungen oder Förderelemente 5 in Reiche angeordnet und können Ladegüter (in Figur 1 nicht dargestellt) in x-Richtung bewegen. Den Förderelementen 5 sind dritte Fördereinrichtungen oder Transferelemente 6 zugeordnet. Jedes Transferelement 6 kann ein Ladegut aufnehmen, dieses in y-Richtung und somit in das Fach 2 bewegen bzw. von dort aufnehmen. Je nach technischer Ausgestaltung kann das Transferelement 6 für den Aufnahme- bzw. Absetzvorgang eine geringe Bewegung in z-Richtung oder eine Greifbewegung ausführen. Förderelement 5 und Transferelement 6 können je nach technischer Ausführung baulich eine Einheit bilden.

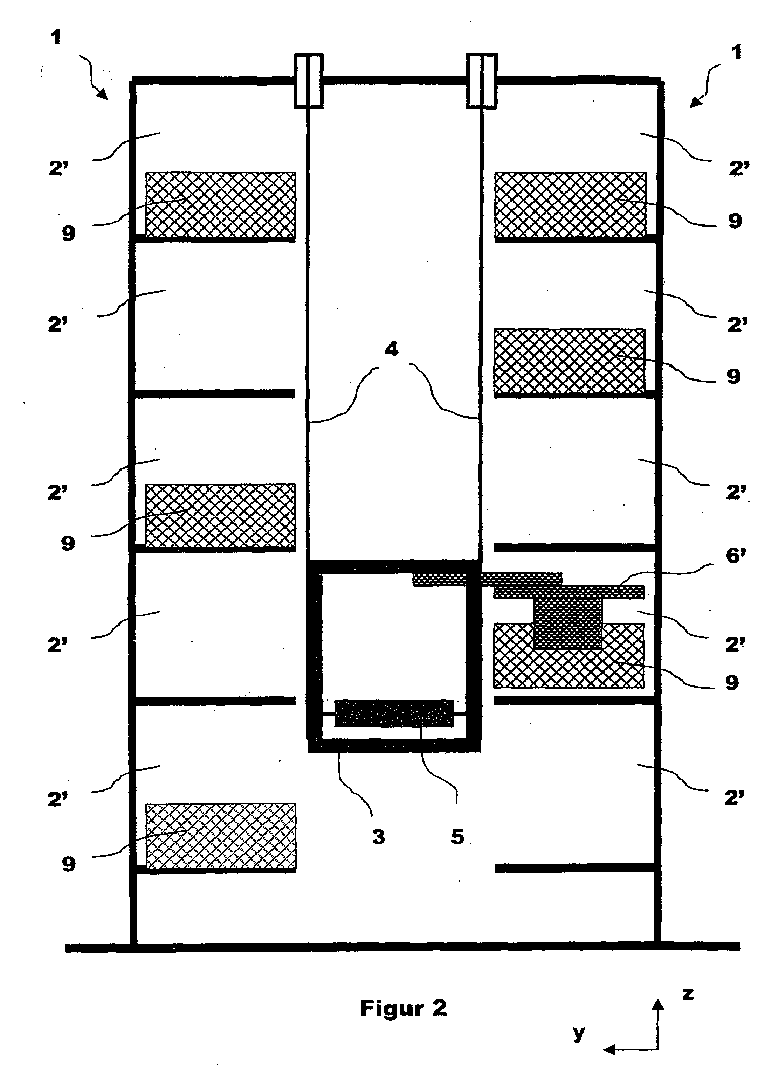

Da keines der Transferelemente 6 eine Bewegung in x-Richtung ausführen soll, ist hier je ein Transferelement 6', wie in Figur 2 dargestellt (Schnittansicht bei Einlagerung eines Ladegutes 9), immer allen Fächern 2' mit identischer x-Koordinate zugeordnet, also den beiden sich gegenüberliegenden Regalspalten, in die das Transferelement 6' einfahren kann.

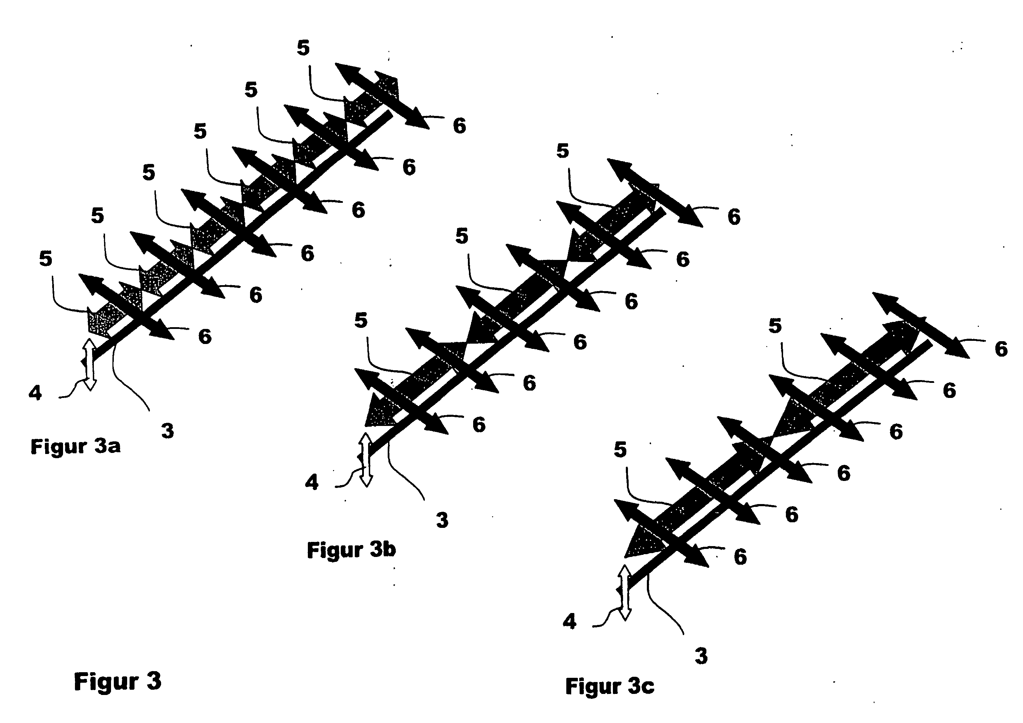

Das Transferelement 6 und das Förderelement 5 können in unterschiedlichen Zahlenverhältnissen einander zugeordnet sein. Figur 3 zeigt Zuordnungen von Transferelementen 6 zu Förderelementen 5 z. B. in den Verhältnissen 1:1 (Figur 3a), 2:1 (Figur 3b) und 3:1 (Figur 3c). Bei größeren Verhältnissen als 1:1 sinkt zwar der konstruktive Aufwand, es ergeben sich aber Einschränkungen bei den Möglichkeiten des Ablaufs der Ein- oder Auslagerungsvorgänge, weil das Transportieren und Verteilen der Ladegüter auf den Förderelementen 5 gröber "gerastert" und dadurch weniger flexibel wird.

Ein Einlagerungszyklus, bei dem alle Prozesse automatisch gesteuert werden können, läuft folgendermaßen ab:

Nach Positionierung des Tragrahmens 3 in Übernahmeposition, werden über eine Zuführung 7 Ladegüter 9 den Förderelementen 5 zugeführt, so dass sich minimal bei einem, maximal bei allen Transferelementen 6 Ladegüter 9 befinden. Hierbei bewegen sich die Ladegüter 9 auf den Förderelementen 5 und von Förderelement 5 zu Förderelement 5. Haben alle einzulagernden Ladegüter 9 die Zuführung 7 verlassen, so bewegt sich der Tragrahmen 3 mittels der Hubeinrichtung 4 auf die ihm durch die Steuerung zugewiesene Fachebene, d. h. vor diejenigen Fächer 2, die alle die selbe vorgegebene z-Koordinate haben. Das ist die durch die Steuerung ausgesuchte Regalzeile. Anschließend findet durch die entsprechenden Transferelemente 6 die Einlagerung einzelner oder aller Ladegüter 9 in die Regalfächer statt. Mindestens positioniert die Hubvorrichtung 4 den Tragrahmen 3 für die Einlagerung aller von Zuführung 7 aufgenommenen Ladegüter 9 (z. B. n Stück) in einem Zyklus nur einmal, wenn nämlich alle Ladegüter 9 in einer Regalzeile eingelagert werden sollen. Maximal positioniert die Hubvorrichtung 4 den Tragrahmen 3 für die Einlagerung aller Ladegüter 9 (z. B. n Stück) in einem Zyklus n-mal, wenn nämlich jedes Ladegut 9 auf einer anderen z-Ebene (Regalzeile) einzulagern ist. Durch die Möglichkeit der Übergabe der Ladegüter 9 von Förderelement zu Förderelement 5 können die Ladegüter 9 in einem Einlagerungszyklus auch in sich direkt übereinander befindlichen Fächern 2' eingelagert werden. So können sich sogar alle anzusteuernden Fächer, wie z. B. in Figur 2 dargestellt, in einer Regalspalte befinden.

Entsprechend der Einlagerung können auch automatisch gesteuerte Auslagerungen durchgeführt werden. Je nach Steuerungsstrategie können auch Kombinationen aus Einund Auslagerungsvorgängen während eines Zyklus durchgeführt werden. Zum Abtransport der Ladegüter 9 von den Förderelementen 5 dient eine Abführung 8, wobei Zuführung 7 und Abführung 8 identisch sein können, d. h. eine kombinierte Zu- und Abführung arbeitet dann im Reversierbetrieb.

Aus dem Beschriebenen ergeben sich folgende besondere Vorteile des Systems:

Das integrierte Lager- und Transportsystem bietet die Möglichkeit, zwei sich gegenüberliegenden Regalspalten ein Transferelement 6 zuzuordnen, wobei Ladegüter 9 mittels der Förderelemente 5 zwischen den Transferelementen 6 und damit zwischen den Regalspalten wechseln können. Hierdurch lassen sich extrem hohe Ein- und Auslagerleistungen erzielen. Wird jedem Transferelement 6 ein Förderelement 5 zugeordnet, bestehen außerdem keine Beschränkungen in Bezug auf eine vollständige Befüllung der Förderelemente 5. D. h. vor Beginn eines Einlagerungszyklus können alle Transferelemente 6 mit Ladegütern 9 belegt werden, unabhängig davon, wo sich freie Fächer 2 für die Ladegüter 9 befinden. Entsprechendes gilt für die Auslagerung.

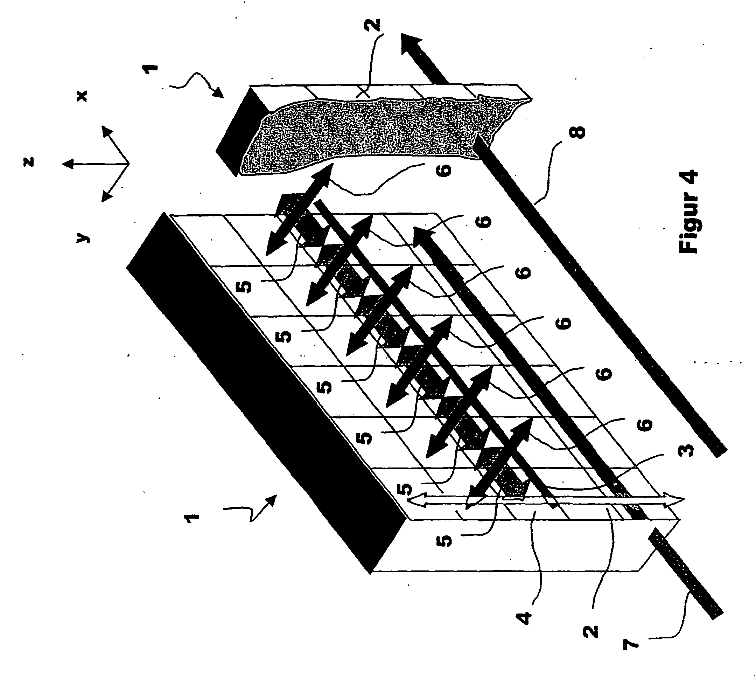

Gestaltet man das System so, dass sich, wie in Figur 1 dargestellt, die Zuführung 7 und Abführung 8 auf sich gegenüberliegenden Seiten befinden, also vor Gassenanfang und nach Gassenende, so kann gleichzeitig eine Befüllung und Entleerung der Förderelemente 5 erfolgen, d. h. abzuführende Ladegüter verlassen das System über die Abführung 8, während gleichzeitig der Zulauf über Zuführung 7gestartet werden kann. Zusätzlich oder alternativ können Zu- 7 und Abführung 8 räumlich auch in den Lagerbereich 1 integriert werden - z. B. als Förderstrecken, die jeweils in eine Regalzeile, egal auf welcher z-Ebene, gelegt werden - so dass die Ladegüter nicht über die Förderelemente 5 sondern über die Transferelemente 6 übernommen werden (Figur 4). Diese Variante bietet sich zur parallelen Beschickung besonders an, wenn der Tragrahmen 3 baulich sehr lang ausgeführt werden soll.

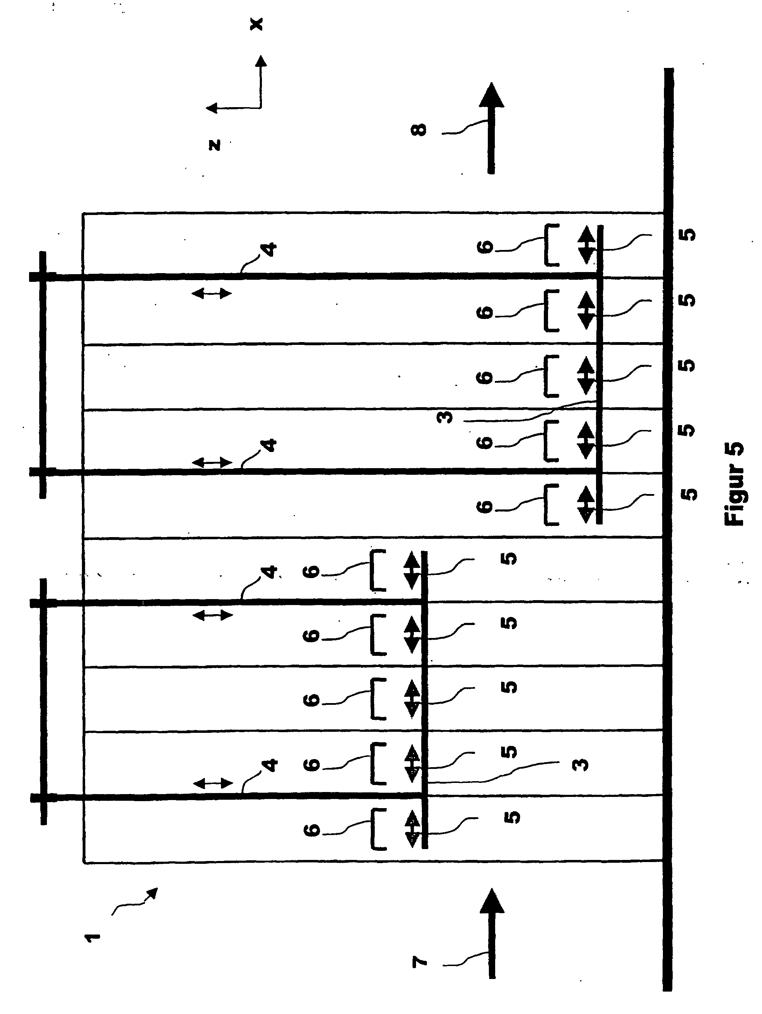

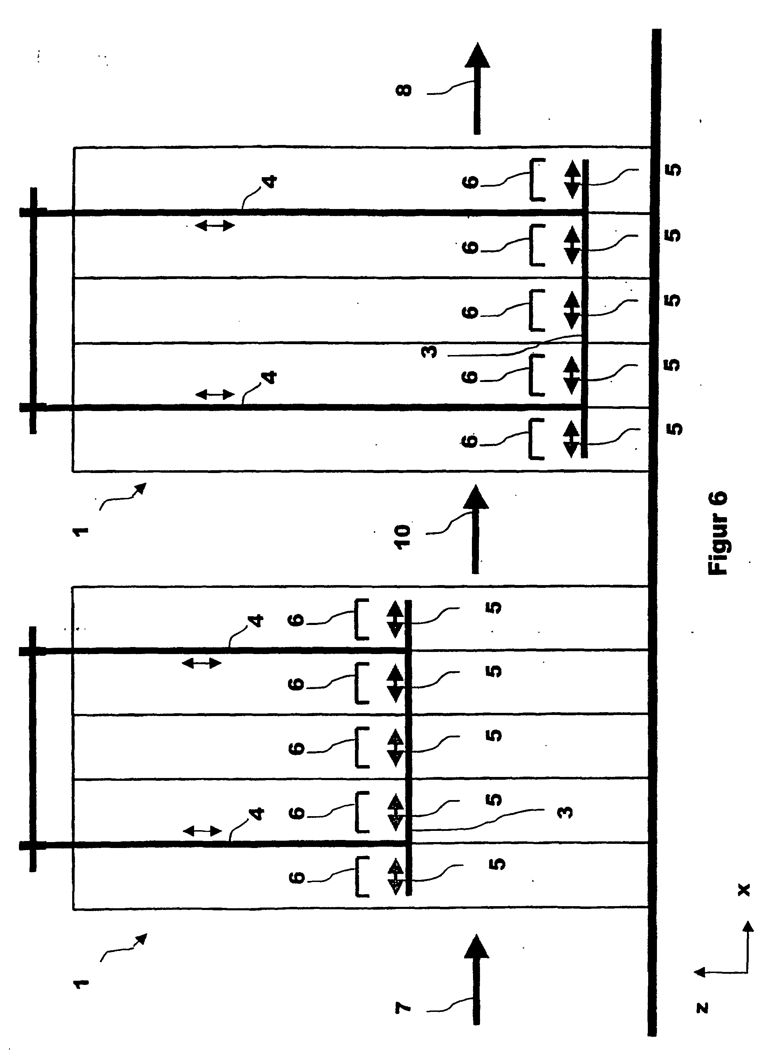

Eine weitere Besonderheit dieses Systems besteht darin, dass in einer Regalgasse mehrere Tragrahmen 3 an von einander unabhängigen Hubeinrichtungen 4 nebeneinander einsetzbar sind (Figur 5). Die Übernahme von Ladegütern 9 zwischen Förderelementen 5 benachbarter Tragrahmen 3 ist immer dann möglich, wenn diese auf einem Höhenniveau gleicher z-Koordinate positioniert sind. Durch zusätzliche Zwischenförderer 10 (Figur 6) können jeweils benachbarte Tragrahmen 3 aber auch räumlich voneinander getrennt werden. Hierdurch lässt sich z. B. ein besserer Zugang für Wartungsarbeiten erreichen.

## Patentansprüche

1. Vorrichtung zum Einsortieren, Lagern und Aussortieren von Gütern mit
- mindestens einem Regal (1) mit Fächern (2), die zueinander in waagerechten Zeilen und senkrechten Spalten angeordnet sind,
- einer ersten Fördereinrichtung (4), die eine Hubeinrichtung (4) ist, mit einem Tragrahmen (3), der mittels der ersten Fördereinrichtung (4) in der senkrechten Richtung in einer im Wesentlichen senkrechten Ebene vor den Fächern (2) verfahrbar ist,
- ebenso vielen an dem Tragrahmen (3) angebrachten zweiten Fördereinrichtungen (3) wie Regalspalten, die jeweils ein Förderband sind, das das Gut in der waagerechten Richtung verfährt und die in Reihe angeordnet eine Förderlinie bilden, zum Fördern der Güter in der waagerechten Richtung in der im Wesentlichen senkrechten Ebene vor den Fächern (2)
- und mehr als einer dritten Fördereinrichtung (6) zum Fördern der Güter zwischen einer zweiten Fördereinrichtung (5) und einem Fach (2).

2. Vorrichtung nach Anspruch 1, **gekennzeichnet durch** ebenso viele dritte Fördereinrichtungen (6) wie Regalspalten und **dadurch**, dass jede dritte Fördereinrichtung (6) einer Regalspalte zugeordnet an dem Tragrahmen (3) angebracht ist.

3. Vorrichtung nach einem der vorhergehenden Ansprüche, **dadurch gekennzeichnet, dass** die erste (4) und die zweite Fördereinrichtung (5) über die gesamte Erstreckung des Regals (2) in der betreffenden Richtung verfahrbar ist.

4. Vorrichtung nach einem der vorhergehenden Ansprüche, **gekennzeichnet durch** zwei Regale (2), die jeweils auf einer Seite der senkrechten Ebene angeordnet sind.

## Claims

1. Device for storing and retrieving articles, having
- at least one rack (1) with compartments (2) which are arranged in horizontal rows and vertical columns in relation to one another,
- a first conveying arrangement (4) which is a lifting arrangement (4) with a carrying frame (3) which can be displaced by means of the first conveying arrangement (4) in the vertical direction in an essentially vertical plane in front of the compartments (2),
- as many second conveying arrangements (5) as rack columns which are fitted to the carrying frame (3) and are in each case a conveyer belt which moves the article in the horizontal direction and, arranged in series, form a conveying line, for conveying the articles in the horizontal direction in the essentially vertical plane in front of the compartments (2),
- and more than one third conveying arrangement (6) for conveying the articles between a second conveying arrangement (5) and a compartment (2).

2. Device according to Claim 1, **characterized by** as many third conveying arrangements (6) as rack columns, and in that each third conveying arrangement (6) is fitted on the carrying frame (3) in a manner in which it is assigned to one rack column.

3. Device according to one of the preceding claims, **characterized in that** the first conveying arrangement (4) and the second conveying arrangement (5) can be displaced in the relevant direction over the entire extent of the rack (2).

4. Device according to one of the preceding claims, **characterized by** two racks (2) which are each arranged on one side of the vertical plane.

## Revendications

1. Dispositif pour le rangement, le stockage et l'extraction de marchandises, comprenant :
- au moins un rayonnage (1) avec des compartiments (2) qui sont disposés en lignes horizontales et en colonnes verticales,
- un premier dispositif de transport (4) qui est un dispositif de levage (4), avec un cadre porteur (3) qui peut être déplacé au moyen du premier dispositif de transport (4) dans la direction verticale dans un plan essentiellement vertical devant les compartiments (2),
- autant de deuxièmes dispositifs de transport (5) montés sur le cadre porteur (3) qu'il y a de colonnes de rayonnage, lesquels sont dans chaque cas une bande transporteuse, qui déplace la marchandise dans la direction horizontale, et forment, disposés en rangée, une ligne de transport, pour le transport des marchandises dans la direction horizontale dans le plan essentiellement vertical devant les compartiments (2),
- et plus d'un troisième dispositif de transport (6) pour le transport des marchandises entre un deuxième dispositif de transport (5) et un compartiment (2).

2. Dispositif selon la revendication 1, **caractérisé par** autant de troisièmes dispositifs de transport (6) qu'il y a de colonnes de rayonnage et en ce que chaque troisième dispositif de transport (6) est associé à une colonne de rayonnage et est monté sur le cadre porteur (3).

3. Dispositif selon l'une quelconque des revendications précédentes, **caractérisé en ce que** le premier (4) et le deuxième (5) dispositif de transport peuvent être déplacés dans la direction concernée sur toute l'étendue du rayonnage (2).

4. Dispositif selon l'une quelconque des revendications précédentes, **caractérisé par** deux rayonnages (2), qui sont disposés chacun d'un côté du plan vertical.
